(19) Europäisches Patentamt
European Patent Office
Office européen des brevets

(11) Publication number: **0 063 818**
**A1**

(12) **EUROPEAN PATENT APPLICATION**

(21) Application number: **82103576.3**

(22) Date of filing: **27.04.82**

(51) Int. Cl.³: **C 07 C 69/587**, C 07 C 67/38, B 01 J 31/18

(30) Priority: **27.04.81 US 258140**
**27.04.81 US 258145**
**27.04.81 US 258146**

(43) Date of publication of application: **03.11.82**
**Bulletin 82/44**

(84) Designated Contracting States: **BE DE FR GB IT NL**

(71) Applicant: **NATIONAL DISTILLERS AND CHEMICAL CORPORATION, 99 Park Avenue, New York, NY 10016 (US)**

(72) Inventor: **Hanes, Ronnie Michael, 5817 Mt. Vernon Drive, Milford Ohio (US)**
Inventor: **Scheben, John Andrew, 107 Locust Street, Erlanger Kentucky (US)**
Inventor: **Goetz, Richard Walter, 805 Cedarhill Drive, Cincinnati Ohio (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 43, D-8000 München 22 (DE)**

(54) **Process for the preparation of alkyl nonadienoate esters.**

(57) In the process for reacting a mixture of 1,3-butadiene, carbon monoxide and a monoalkanol of the general formula ROH in which R is a straight or branched chain alkyl group of from 1 to about 12 carbon atoms in the presence of, as catalyst, a palladium-ligand complex which comprises (a) a member selected from the group consisting of zerovalent palladium, a palladium-containing composition which can provide zerovalent palladium under reaction conditions and palladium (II) salt, (b) a strong ligand consisting of tertiary phosphine having a pKa in water of not greater than about 6, and (c) a weak ligand consisting of tertiary phosphine having a pKa in water of greater than about 6, to provide alkyl nonadienoate ester, optionally containing at least one phenol promoter, and if desired, an alkoxide ion.

EP 0 063 818 A1

# PROCESS FOR THE PREPARATION OF ALKYL NONADIENOATE ESTERS

This invention relates to processes for the preparation of esters and, more particularly, to the one-step preparation of alkyl nonadienoate esters by the reaction of 1,3-butadiene, carbon monoxide and alkanol in the presence of a palladium-containing catalyst.

The reaction of monoolefins and conjugated diolefins with carbon monoxide and alkanol to provide an alkyl ester is well known. Numerous catalysts have been used or proposed for this synthesis including bis(triphenylphosphine) palladium chloride as in U.S. Patent No. 3,437,676; a palladium complex such as palladium diacetate with an aromatic phosphine such as triphenylphosphine as in U.S. Patent No. 3,530,155, Japanese Patent No. 72/37,934, Tsuji, et al., Tetrahedron 28, 3721 (1972) and Billups, et al., J.C.S. Chem. Comm., 18 (5), 1067 (1971); palladous chloride, cupric chloride and triphenylphosphine as in U.S. Patent No. 3,530,168; palladium halide in molten tetrahydrocarbylammonium or phosphonium trihalostannate (II) or trihalogermanate (II) salts as in U.S. Patent Nos. 3,657,368, 3,832,391, 3,968,133, 4,038,208 and 4,042,530; palladium salt complexed with a phosphine ligand such as palladium dichloride bis(triphenylphosphine) in the presence of a tin cocatalyst or promoter such as stannous chloride dihydrate as in U.S. Patent No. 3,700,706; the palladium complex $[PdCl_2(\text{triphenylphosphine})_2]$ $(C_6H_4Cl_2)_x$ as in U.S. Patent No. 3,723,486; compounds of the formula $(L)_2$ MXY wherein L is a phosphinite, phosphonite, thiophosphinite, or dithiophosphonite ligand, M is palladium and X and Y are chloride, bromide, iodide, various substituted and unsubstituted alkyls and aryls, cyano, $SnCl_3$, isocyanate,

BAD ORIGINAL

0063818

thiocyanate, aroyl and lower perfluoroalkyl groups as in U.S. Patent Nos. 3,776,929 and 3,906,615; zerovalent palladium phosphine complex with or without added catalyst activator (additional phosphine) as in U.S. Patent No. 3,780,074 and, ligand-stabilized platinum (II) catalyst complexed with excess Group IV-B metal halide, the ligand being selected from Groups V-B and VI-B of the Periodic Table as in U.S. Patent No. 3,819,669. U.S. Patent Nos. 4,124,617 and 4,172,087 each describes a one-step reaction of a conjugated aliphatic diene, alkanol and carbon monoxide in a nitrogen-containing tertiary base and in the presence of a palladium salt/ tertiary phosphorus-containing donor ligand as catalyst to provide an unsaturated aliphatic ester derivative thereof. Other catalyst compositions which have been disclosed for use in the aforedescribed synthesis include a combination of palladium diacetate, palladium chloride/triphenylphosphine complex and additional triphenylphosphine as in Japanese Patent No. 73/25,169; and, palladium diacetate and amino-substituted phosphine as in Japanese Patent No. 76/149,206.

It has now been surprisingly discovered that a mixture of 1,3-butadiene, carbon monoxide and a monoalkanol of the general formula ROH in which R is a straight or branched chain alkyl group of from 1 to about 12 carbon atoms can be reacted in the presence of catalyst to provide alkyl nonadienoate ester at high levels of productivity and little, if any, catalyst decomposition, employing as catalyst, a palladium-ligand complex comprising:

a) a member selected from the group consisting of zerovalent palladium, a palladium-containing composition which can provide zerovalent palladium under reaction conditions and palladium (II) salt;

BAD ORIGINAL

b) a strong ligand selected from the group consisting of tertiary phosphine having a pKa in water of not greater than about 6, a phosphite of the general formula $(R^1O)(R^2O)(R^3O)P$ in which each of $R^1$, $R^2$ and $R^3$ is an alkyl group having at least 9 carbon atoms, an aryl group or an alkaryl group, an arsine of the general formula $R^1R^2R^3As$ in which each of $R^1$, $R^2$ and $R^3$ have the aforestated meanings and a stibine of the general formula $R^1R^2R^3Sb$ in which each of $R^1$, $R^2$ and $R^3$ have the aforestated meanings, the mole ratio of said strong ligand to palladium being from about 1:1 to about 3:1; and,

c) a weak ligand selected from the group consisting of tertiary phosphine having a pKa in water of greater than about 6, a phosphite of the general formula $(R^4O)(R^5O)(R^6O)P$ in which each of $R^4$, $R^5$ and $R^6$ is an alkyl group having less than 9 carbon atoms, an arsine of the general formula $R^7R^8R^9As$ in which each of $R^7$, $R^8$ and $R^9$ is an alkyl group having less than 9 carbon atoms or an alkoxy group and a stibine of the general formula $R^7R^8R^9Sb$ in which each of $R^7$, $R^8$ and $R^9$ have the aforestated meanings, the mole ratio of said weak ligand to palladium being from about 4:1 to about 100:1.

The palladium-donor ligand complex of this invention can provide significantly higher levels of productivity compared to those of known and conventional catalyst systems employed in the telomerization/carbonylation of 1,3-butadiene to provide alkyl nonadienoate and unlike the significant catalyst decomposition observed to have occurred in known catalyst compositions, no appreciable amount of catalyst decomposition has been detected in the catalyst compositions of this invention.

BAD ORIGINAL

It has also been discovered that the hereinabove described process can be further significantly improved by the addition to said catalyst composition of a catalyst promoting amount of at least one phenolic promoter. As such, the process and catalyst composition herein represent still a further improvement over the ester synthesis and catalyst complex described in U.S. Patent Nos. 4,124,617 and 4,172,087, the entire contents of which are incorporated by reference herein.

The phenolic promoter, when added to the reaction medium, has been found to improve both reaction rate and selectivity for the desired alkyl nonadienoate (i.e., productivity). The extent to which these process variables will be improved (compared to the identical catalyst compositon in the absence of phenolic promoter) depends upon the specific promoter chosen and its concentration. Concentrations of promoter can vary widely with mole ratios of promoter to palladium of from about 10:1 to 500:1, and preferably, from about 50:1 to about 300:1, being entirely effective.

It is also within the scope of the present invention and has now surprisingly been discovered that in the reaction of 1,3-butadiene, alkanol and carbon monoxide in the presence of a catalyst composition containing a palladium component and a Group VB ligand forming component to provide an alkyl nonadienoate ester, the addition to the reaction medium of alkoxide ion, preformed or prepared in situ, significantly increases the yield of ester reaction product. Thus, for example, in the catalytic reaction of 1,3-butadiene, methanol and carbon monoxide to provide methyl nonadienoate according to the equation

$$2CH_2{=}CHCH{=}CH_2 + CO + CH_3OH \xrightarrow{\text{catalyst}} CH_2{=}CH(CH_2)_3CH{=}CHCH_2COOCH_3$$

the presence of methoxide ion in the reaction medium significanly increases the yield of this commercially important ester, for example, by a factor of from two to three times compared to the yield provided by the same reaction in the absence of methoxide ion.

BAD ORIGINAL

Broadly stated, this aspect of the process of the present invention comprises reacting 1,3-butadiene with an aliphatic alkanol of from 1 to about 12 carbon atoms in the presence of a catalytically effective amount of a catalyst composition comprising a member of the group consisting of zerovalent palldium, a palladium-containing material which provides zerovalent palladium under reaction conditions and palldium (II) salt, and a Group VB tertiary donor ligand and a catalyst promoting amount of alkoxide ion to provide an alkyl nonadienoate ester.

The alkyl nonadienoate esters produced by the process of this invention can be readily reduced by known and conventional techniques, e.g., catalytic hydrogenation, to the corresponding alkyl nonanoate esters which are useful in the formulation of synthetic lubricants.

The 1,3-butadiene employed in the present invention can vary in its degree of purity with industrial grades of this diolefin being preferred for reasons of economy and ready availability.

Alkanols which are suitably co-reacted with butadiene include methanol, ethanol, propanol, isopropanol, n-butanol, sec-butanol, tert-butanol, hexanol, decanol, dodecanol, and the like.

As stated above, the palladium component of the catalyst complex herein can be zero-valent palladium, a palladium-containing composition which will provide zerovalent palladium, i.e., will undergo reduction, under the conditions of the reaction and/or a palladium (II) salt, with or without the additional presence of a reducing agent such as alkali metal alkoxide, alkali metal acetate and/or alkali metal borohydride. Among such palladium-containing compositions are included palladium (II) acetate, palladium (II) formate, palladium (II) octanoate, palladium (II) propionate, palladium acetylacetonate, palladium (II) bis ($\pi$-allyl), palladium (II) nitrate, palladium sulfate, and palladium (II) halides

BAD ORIGINAL

such as palladium chloride and palladium bromide. Molar ratios of palladium to 1,3-butadiene which can be used herein can vary widely, e.g., from about 1:25 to about 1:20,000, with from about 1:2,000 to about 1:8,000 being preferred.

Examples of strong ligands which are useful herein, together with the productivities and the palladium precipitate rating (a measure of catalyst decomposition) of each, are given below in Table 1 as follows:

BAD ORIGINAL

TABLE I

| Strong Ligand (Ligand:Pd = 1:1) | Catalyst Productivity (moles ester/mole Pd/hr) | Pd Precipitate Rating (a) |
|---|---|---|
| $P(CH_2CH_2CN)_3$ (b) | 108 | 0 |
| $PPh(CH_2CH_2CN)_2$ (c) | 52 | 2 |
| $PPh_3$ (c) | 12 | 1 |
| P(Odecyl) $(OPh)_2$ (b) | 49 | 2 |
| 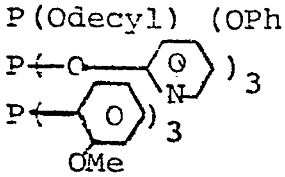 (d) | 139 | 4 |
| | 138 | 7 |
| 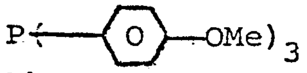 (d) | 344 | 7 |
| $Ph_2As-CH_2CH_2-AsPh_2$ (b) | 52 | 6 |
| $P(CH_2Ph)_3$ (c) | 14.5 | 4 |
| $AsPh_3$ (e) | 275 | 7 |

(a) On a subjective rating scale of 0 to 10, 0 indicates no appreciable palladium decomposition and 10 indicates gross decomposition.

(b) Catalyst preparation cycle: 8 hrs., 90°C., 500 psig CO, 10:1 $PBu_3$ as weak ligand. Reaction: 4 hrs., 110°C., 1,000 psig CO.

(c) 95°C., 1,000 psig CO, 10 hrs. reaction, 10:1 $PBu_3$ as weak ligand.

(d) 100°C., 500 psig CO, 10:1 $PBu_3$, 2:1 sodium methoxide as promoter.

(e) 110°C., 500 psig CO, 10:1 $PBu_3$.

Examples of useful weak ligands, together with the effect on conversion of methanol and their palladium precipitate ratings, are given below in Table II as follows:

BAD ORIGINAL

TABLE II

| Weak Ligand (Ratio) | Methanol Conversion (%) | Pd Precipitate Rating (a) |
|---|---|---|
| $PBu_3$(10) (b) | 30 | 3 |
| $PPhBu_2$(10) (b) | 31 | 3 |
| PPh(cyclohexyl)$_2$(10) (b) | 30 | 1 |
| $P(OiPr)_3$(5) (c) | 28 | 3 |

(a) 110°C., 1,000psig CO, 10 hours.

(b) 1:1 $P(CH_2CH_2CN)_3$ as strong ligand.

(c) 1:1 $P(OPh)_2(OC_{10}H_{23})$ as strong ligand.

From the above, it can be seen that one of the most effective combinations of strong and weak ligands is that of tris(2-cyanoethyl)phosphine which has a pKa in water of 1.37 and tri-n-butyl phosphine which has a pKa in water of 8.43. Other strong and weak phosphine ligands are given in O.A. Streuli, Analytical Chemistry, 32 (8), p. 985 (July 1960), the contents of which are incorporated by reference herein.

Among the Group VB tertiary donor ligands which can be complexed with the foregoing palladium-containing materials are the trivalent compounds of nitrogen, phosphorus, arsenic and antimony such as $P(C_6H_5)_3$, $As(C_6H_5)_3$, $Sb(C_6H_5)_3$, $P(CH_3)_2C_6H_5$, $P(iso\text{-}C_4H_9)_3$, $P(p\text{-}CH_3.C_6H_4)_3$, $P(c\text{-}C_6H_{11})_3$, $P(OC_6H_5)_3$, $P(p\text{-}CH_3.C_6H_4)(C_6H_5)_2$, $P(C_6H_5)_2[3,4\text{-}(CH_3O)_2C_6H_3]$, $P(CH_3)_3$, $P(C_2H_5)_3$, $P(n\text{-}C_4H_9)_3$, $P(C_8H_{17})_3$, $P(o\text{-}CH_3.C_6H_4)_3$, $(C_6H_5)_2As(CH_2)_2As(C_6H_5)_2$, $P(p\text{-}Cl.C_6H_4)_3$ and $P(C_8H_{17})_3$. Especially preferred are phosphine ligands of $pK_a > 6.0$. such as triethylphosphine, tri-n-butyl phosphine, tricyclohexylphosphine, tri-n-octylphosphine and triphenyl phosphine. Typical catalyst complexes include $Pd(OAc)_2$-$2P(OPh)_3$; $Pd(OAc)_2$-$2P(OEt)_3$; $Pd(OAc)_2$-$2P(p\text{-}Cl.C_6H_4)_3$; $Pd(OAc)_2$-$2PPh_3$; $Pd(OAc)_2$-$2P(p\text{-}CH_3.C_6H_4)_3$; $Pd(OAc)_2$-$2P(n\text{-}Bu)_3$; $Pd(OAc)_2$-$2P(c\text{-}C_6H_{11})_3$; $Pd(OAc)_2$-$2PEt_3$; $Pd(OAc)_2$-$P(o\text{-}CH_3.C_6H_4)_3$; $Pd(OAc)_2$-DIARS; $Pd(PPh_3)_2(OAc)_2$; $Pd(NO_3)_2$-$2P(n\text{-}Bu)_3$; $Pd[PPh_2(3,4\text{-}(CH_3O)_2\text{-}C_6H_3)]_2Cl_2$-10NaOAc; $PdCl_2$-$2P(n\text{-}Bu)_3$-10NaOAc; $Pd(Acac)_2$-$2P(n\text{-}Bu)_3$, and $Pd(OAc)_2$-$2P(C_6H_{11})_3$.

BAD ORIGINAL

For optimum yields and maximum catalyst stability, at least one molar equivalent of Group VB tertiary donor ligand should be present per gram atom of palladium although greater amounts of donor ligand than this can also be used. The amount of palladium catalyst employed in the reaction is not overly critical, subject, of course, to there being a catalytically effective amount present. From 50 to 400 moles of 1,3-butadiene per mole of palladium metal catalyst are advantageously utilized.

It is also within the scope of the present invention to incorporate alkoxide ion in the reaction medium as a catalyst promoter and to further improve the stability of the palladium catalyst, either preformed or formed <u>in situ</u> by merely dissolving alkali metal or other source of chemically reactive alkali metal, e.g., alkali metal borohydride, in the selected alkanol, ROH. Alkoxide ion is formed quantitatively according to the reaction (illustrated for sodium metal which is preferred):

$$ROH + Na \longrightarrow RO^- + Na^+ + 1/2H_2$$

The alkanol chosen for conversion to the corresponding alkoxide can be any alkanol heretofore described as a reactant and advantageously is identical with said reactant. In such case, the alkoxide ion is preferably generated <u>in situ</u> by the addition of an amount of alkali metal calculated to provide the desired amount of ion. The amount of alkoxide ion which can be used herein can vary over fairly wide limits. Thus, for example, from about 0.1 to about 10 molar equivalents of alkoxide ion per gram atoms of palladium, and preferably, from about 0.5 to about 5 molar equivalents of alkoxide ion per gram atom of palladium, can be used with good results.

The reaction herein requires at least a stoichiometric quantity of carbon monoxide which can be supplied as a relatively pure gas or in admixture with up to 30 volume percent of an inert gas such as nitrogen, argon, neon, and the like.

BAD ORIGINAL

Optimum choice of reaction conditions will depend in part upon the nature and concentration of the reactants, the catalyst and the optional alkoxide. Temperatures of from about 30° to about 150°, pressures on the order of from about 100 psig to about 3,000 psig and reaction times of up to 20 hours are suitable. It has been observed herein that employing alkoxide promotor, yield and selectivity of the telomerization/carbonylation reaction for the desired ester increases with increasing carbon monoxide pressure within the range of from about 400 psig to about 900 psig at 90°C. At pressures in excess of 900 psig, selectivity for the desired ester has been observed to increase while yield decreases. Although catalyst stability can be somewhat of a problem in the regime below about 900 psig and at an operating temperature of about 90°C, it has been found to be reasonably good above this level of pressure. In one procedure which can be used to obtain the catalyst herein, all reaction ingredients with the exception of the 1,3-butadiene, i.e., palladium-containing component, strong ligand, weak ligand and alkanol, are added to a reactor, the reactor is purged and pressurized to 500 psig carbon monoxide pressure and heated to 90°C for 1 to 8 hours. Thereafter, the reactor is cooled to ambient temperature, vented and 1,3-butadiene added with the reaction being conducted as described above and as illustrated in the following examples.

BAD ORIGINAL

## EXAMPLE 1

This example is illustrative of a process for preparing methyl nonadienoate carried out in accordance with the disclosure of U.S. Patent Nos. 4,124,617 or 4,172,087.

To a 300 cc stirred autoclave was added 80 ml quinoline, 40 ml methanol, 2.67 mmoles $Pd(OAc)_2$, and 5.5 mmoles $PBu_3$. Butadiene (354 mmoles) was then charged to the reactor and the reactor pressurized to 700 psig with CO. The reactor was then heated at 110°C. for 6 hours. Analysis of the product solution by gas-liquid chromatography showed 173 mmoles ester present. The palladium precipitate rating was 10.

BAD ORIGINAL

0063818

## EXAMPLE 2

Contrasting with the results of Example 1 was the high productivity and the low palladium precipitate rating obtained in accordance with the process of the present invention as illustrated in this example.

To a 300 cc stirred autoclave was added 0.15 mmole $Pd(OAc)_2$, 0.15 mmole tris(2-cyanoethyl)phosphine, 1.5 mmole tributylphosphine and 59 ml methanol. The autoclave was pressurized to 500 psig with CO and heated at 90°C. for 8 hours. After cooling, the autoclave was vented and 462 mmoles 1,3-butadiene added. The autoclave was pressurized to 1000 psig with CO and heated at 110°C. for 4 hours. Analysis of the product solution showed 64.7 mmoles of ester. The palladium precipitate rating was 0.

BAD ORIGINAL

EXAMPLE 3

To a 300 cc Magnedrive autoclave was added 0.033 g (0.15 mmole) $Pd(OAc)_2$, 0.087 g (0.45 mmole) tris(2-cyanoethyl)-phosphine, 0.910 g (4.5 mmoles) tri-n-butylphosphine, 46 ml methanol and 5 ml anisole (as internal standard). The reactor was purged three times with CO, pressurized to 500 psig with CO and heated at 90°C for 2 hours. After cooling to room temperature the reactor was vented. To the reactor was added 63 g (1170 mmoles) of butadiene and the reactor heated at 110°C under a constant 500 psig CO atmosphere for 4 hours. A trace of palladium decomposition was observed and wax formation was moderate. Analysis of the product solution by GLC showed 9 mmoles octatriene, 27 mmoles methoxyoctadiene and 10 mmoles methyl nonadienoate.

BAD ORIGINAL

EXAMPLE 4

This example demonstrates the advantage of the use of the alkoxide sodium methoxide over the previous example.

To a 300 cc Magnedrive autoclave was added 0.910 g (4.5 mmoles) tri-n-butylphosphine, 0.033 g (0.15 mmole) palladium acetate, 0.087 g (0.45 mmole) tris(2-cyanoethyl)-phosphine, 0.54 g (10 mmoles) sodium methoxide, 46 ml methanol and 5 ml anisole (internal standard). The reactor was purged three times with CO, pressurized to 500 psig with CO and heated at 90°C for 2 hours. After cooling to room temperature, the reactor was vented. To the reactor was added 62.8 g (1,160 mmoles) butadiene and the reactor was heated at 110°C under a constant 500 psig CO atmosphere for 4 hours. No palladium decomposition was observed and wax formation was moderate. Analysis of the product solution by GLC showed 6 mmoles octatriene, 13 mmoles methoxyoctadiene and 35 mmoles methyl nonadienoate.

BAD ORIGINAL

EXAMPLE 5

This example demonstrates the use of a zero-valent palladium complex as a catalyst.

A solution of zerovalent palladium complex was prepared by reduction of palladium chloride (0.5334 g) in the presence of a four-fold excess of tributyl phosphine (2.6186 g) using hydrazine as a reducing agent. To a portion of this methanolic solution was added a stoichiometric amount of diphenyl decyl phosphite (0.2230 g).

An aliquot of this solution containing 0.1805 mmoles Pd was charged to a 71 cc glass-lined Parr bomb along with 7 ml methanol and 5 g butadiene. The bomb was filled to 1000 psig with CO and heated at 95°C for 10 hours. A trace of palladium decomposition was observed after reaction. Analysis of the product solution showed the presence of 4.55 mmoles methyl monadienoate or 25.5 moles ester/mole palladium.

BAD ORIGINAL

0063818

EXAMPLE 6

This example demonstrates the use of a zerovalent palladium catalyst.

To a 71 cc glass-lined Parr bomb was added 0.0995 g 5% Pd on carbon, 0.0168 g triphenyl phosphite, 0.0954 g tributyl phosphine, 10 ml methanol and 9 g butadiene. The bomb was filled to 1,000 psig with CO and heated at 90°C for 12 hours. The product solution was bright yellow indicating a soluble palladium complex. Analysis of the product solution showed the presence of 4.8 mmoles methyl nonadienoate or 100 moles methyl nonadienoate/mole Pd.

BAD ORIGINAL

EXAMPLE 7

To a 300 cc glass-lined stirred autoclave were charged 0.0155 g (0.069 mmoles) $Pd(OAc)_2$, 0.0321 g (0.083 mmoles) $P(OPh)_2$(O-decyl), 0.1062 g (0.526 mmoles) $PBu_3$ and 30 ml methanol. The autoclave was sealed and 30 g butadiene were added with a syringe. The reactor was then heated at 90°C. under a constant CO pressure of 500 psig for 12 hours. Stirrer speed was maintained at 1,500 rpm. The recovered product solution (38 ml) was bright yellow and contained 23 mmoles of methyl nonadienoate. Selectivity to the ester was 97% and butadiene conversion was 8%. No catalyst decomposition was observed.

BAD ORIGINAL

EXAMPLE 8

To a 71 cc glass-lined Parr Autoclave were charged 0.014 g (0.062 mmoles) $Pd(OAc)_2$, 0.0152 g (0.079 mmoles) tris(2-cyanoethyl)phosphine, 0.1562 g (0.773 mmoles) $PBu_3$, 10 ml methanol and 9 g butadiene. The autoclave was then pressurized to 1000 psig with CO and shaken at 90°C. for 12 hours. The recovered product solution (12.5 ml) was bright yellow and contained 19 mmoles of methyl nonadienoate. Selectivity to the ester was 89% and butadiene conversion was 22%. No catalyst decomposition was observed.

BAD ORIGINAL

EXAMPLES 9-39

In the following examples, the reaction conditions were identical except that in Example 9, no promoter was added so as to provide a baseline for comparison. The reaction conditions were as follows:

| | | |
|---|---|---|
| Reaction Temperature | : | 110°C. |
| Reaction Pressure | : | 800 psig |
| Reaction Time | : | 4 hours |
| Methanol Conc. | : | 7.5 mol/L |
| 1,3-Butadiene | : | 7.5 mol/L |
| $Pd(OAc)_2$ | : | 0.001 mol/L |
| $P(C_2H_4CN)_3$ | : | 0.003 mol/L |
| $Bu_3P$ | : | 0.01 mol/L |
| Phenol Promoter | : | 0.08 mol/L |

To prepare the catalyst,all of the above ingredients except the 1,3-butadiene were heated for 8 hours under about 700 psig carbon monoxide pressure at 90°C. The solution was then cooled, vented and 1,3-butadiene was added, followed by additional carbon monoxide and the reaction medium was heated to reaction temperatures.

The results of the reactions, given in descending order of productivity for methyl nonadienoate, are set forth in Table III as follows:

BAD ORIGINAL

0063818

TABLE III

| Example | Phenol Promoter | mmoles Methyl Nonadienoate (after 4 hours) |
|---|---|---|
| 9 | none (control) | 81 |
| 10 | 4-cyanophenol | 174 |
| 11 | 4,4'-dihydroxybenzophenone | 169 |
| 12 | 3,5-dichlorophenol | 163 |
| 13 | pyrogallol | 160 |
| 14 | 2-cyanophenol | 156 |
| 15 | 2,6-dichlorophenol | 155 |
| 16 | 4-tert-butylcatechol | 155 |
| 17 | 4,4'-dihydroxydiphenyl sulfone | 149 |
| 18 | chlorohydroquinone | 148 |
| 19 | 2-chlorophenol | 137 |
| 20 | catechol | 136 |
| 21 | 3-chlorophenol | 135 |
| 22 | 4,4'-thiodiphenol | 130 |
| 23 | 2-fluorophenol | 128 |
| 24 | phloroglucinol | 120 |
| 25 | 4-chlorophenol | 114 |
| 26 | resorcinol | 110 |
| 27 | hydroquinone | 107 |
| 28 | 4,4'-diphenol | 104 |
| 29 | 3-tert-butylphenol | 99 |
| 30 | quaiacol | 97 |
| 31 | phenol | 94 |
| 32 | 2-hydroxybenzophenone | 94 |
| 33 | 4-hydroxydiphenyl oxide | 90 |
| 34 | 4-nitrophenol | 89 |
| 35 | 2,3-dihydroxynaphthalene | 89 |
| 36 | 4,4'-isopropylidenediphenol | 87 |
| 37 | 4-tert-butylphenol | 86 |
| 38 | 2,6-di-tert-butylphenol | 86 |
| 39 | dioctadecyl-p-cresol | 83 |

Of the following examples, Example 40 illustrates the use of a known palladium-organophosphorus ligand catalyst complex and Example 41 illustrates the use of substantially similar catalyst but containing alkoxide ion in accordance with this aspect of this invention.

## EXAMPLE 40

This example demonstrates the use of the catalyst system and conditions disclosed in Japanese Patent 72/37,934.

To a 71 cc glass-lined Parr autoclave were charged 0.0058 g (0.026 mmoles) palladium acetate, 0.0335 g (0.128 mmoles) triphenylphosphine, 10 ml methanol and 5 g butadiene. The autoclave was pressurized to 1000 psig with CO and shaken at 110°C for 10 hours. Analysis of the product solution by GLC (gas-liquid-chromatography) showed the presence of 0.58 mmoles methyl nonadienoate. A large amount of palladium decomposition was observed.

## EXAMPLE 41

This example demonstrates the advantage of the addition of sodium methoxide to the catalyst system of Example 1 in accordance with the present invention.

To a 71 cc glass-lined Parr autoclave were charged 0.0054 g (0.024 mmoles) palladium acetate, 0.0302 g (0.115 mmoles) triphenylphosphine, 0.0209 g (0.39 mmoles) sodium methoxide, 10 ml methanol and 5 g butadiene. The autoclave was pressurized to 1000 psig with CO and shaken at 110°C for 10 hours. Analysis of the product solution by GLC showed the presence of 1.28 mmoles methyl nonadienoate. A large amount of palladium decomposition was observed.

BAD ORIGINAL

While a few of the phenol promoters were observed to have given only modest improvement over the control, these data show that many other phenols result in a dramtic improvement in productivity compared to the control.

BAD ORIGINAL

0063818

## EXAMPLE 42

To a 300cc glass lined autoclave were charged 0.023 g $Pd(OAc)_2$, 0.0808 g $PPh_3$ and 30 ml methanol. The autoclave was then pressurized to 500 psi with CO and heated at 75°C. for 2 hours. After cooling to room temperature, the autoclave was vented and 0.1377 g (3.6 mmoles) $NaBH_4$ in 20 ml methanol (chilled in dry ice) was added, followed by 20 g 1,3-butadiene. The autoclave was then pressurized to 500 psig with CO and heated at 75°C. for 15 hours. GLC analysis of the product solution indicated the presence of methyl nonadienoate.

## EXAMPLE 43

To a glass-lined 71 ml Parr autoclave were charged 0.0175 g (0.078 mmoles) $Pd(OAc)_2$, 0.1608 g (0.614 mmoles) $PPh_3$ and 5 ml methanol. To the foregoing were added 0.1647 g (4.33 mmoles) $NaBH_4$ in 5 ml of methanol followed by 10 g butadiene. The autoclave was then pressurized to 1500 psig with CO and shaken at 125°C. for 12 hours. At the end of this period, methyl nonadienoate together with a quantity of a dark solid was present in the reactor, indicating some Pd decomposition.

## EXAMPLE 44

To a 71 cc glass-lined Parr autoclave were charged 0.0140 g (0.0624 mmoles) $Pd(OAc)_2$, 0.1625 g (0.62 mmoles) $PPh_3$ and 5 ml methanol. To the foregoing were added a solution of 0.1171 g (3.08 mmoles) $NaBH_4$ in 5 ml methanol, followed by 9 g 1,3-butadiene. The autoclave was then pressurized to 400 psig with CO and shaken at 90°C. for 12 hours. Methyl nonadienoate together with a quantity of a dark solid was present in the autoclave.

0063818

EXAMPLE 45

To a 71 cc glass-lined Parr autoclave were charged 0.0139 g (0.062 mmoles) $Pd(OAc)_2$, 0.1650 g (0.63 mmoles) $PPh_3$, and 5 ml methanol. To the foregoing were added a solution of 0.1206 g (3.17 mmoles) $NaBH_4$ in 5 ml methanol, followed by 10 g butadiene. The bomb was then pressurized to 700 psig with CO and shaken at 90°C. for 12 hours. At the end of the reaction, methyl nonadienoate together with a small amount of a dark solid was present in the autoclave.

EXAMPLE 46

To a 71 cc glass-lined Parr autoclave were charged 0.0143 g (0.064 mmoles) $Pd(OAc)_2$, 0.1613 g (0.616 mmoles) $PPh_3$ and 5 ml methanol. To the foregoing were added a solution of 0.1205 g (3.17 mmoles) $NaBH_4$ in 5 ml methanol, followed by 9.5 g butadiene. The autoclave was then pressurized to 900 psig with CO and shaken at 90°C. for 12 hours. At the end of the reaction, methyl nonadienoate together with a quantity of a dark solid was present in the autoclave.

EXAMPLE 47

To a 71 cc glass lined Parr autoclave were charged 0.0147 g (0.066 mmoles) $Pd(OAc)_2$, 0.1606 g (0.613 mmoles) $PPh_3$ and 5 ml methanol. To this was added 0.1159 g (3.05 mmoles) $NaBH_4$ in 5 ml methanol, followed by 11 g butadiene. The bomb was then pressurized to 1200 psig with CO and shaken at 90°C. for 12 hours. At the end of the reaction, methyl nonadienoate together with a yellow solid was present in the autoclave. A portion of the latter dissolved in toluene provided a white, apparently polymeric substance.

EXAMPLE 48

To a 71 cc glass-lined Parr autoclave were charged 0.0144 g (0.064 mmoles) $Pd(OAc)_2$, 0.1730 g (0.66 mmoles) $PPh_3$. To the foregoing were added 5 ml methanol followed by 0.1185 g (3.12 mmoles) $NaBH_4$ in 5 ml methanol and then by 10 g butadiene. The autoclave was then filled to 1000 psig CO and heated at 90°C. (no shaking) for 12 hours. In addition to methyl nonadienoate, a quantity of a yellow solid was recovered.

EXAMPLE 49

To a 71 cc glass-lined Parr autoclave were charged 0.0139 g (0.062 mmoles) $Pd(OAc)_2$, 0.1488 g (0.74 mmoles) $PBu_3$ and 5 ml methanol. To the foregoing were charged 0.1197 g (3.15 mmoles) $NaBH_4$ in 5 ml methanol, followed by 6 g butadiene. The autoclave was then pressurized with 1000 psig CO and shaken at 90°C. for 12 hours. In addition to methyl nonadienoate, a quantity of a dark solid was present in the reactor.

0063818

WHAT IS CLAIMED IS:

1. A process for reacting a mixture of 1,3-butadiene, carbon monoxide and a monoalkanol of the general formula ROH in which R is a straight or branched chain alkyl group of from 1 to about 12 carbon atoms to provide alkyl nonadienoate esters employing as catalyst, a palladium-ligand complex characterized by:

a) A member selected from the group consisting of zerovalent palladium, a palladium-containing composition which can provide zerovalent palladium under reaction conditions and palladium (II) salt;

b) a strong ligand selected from the group consisting of tertiary phosphine having a pKa in water of not greater than about 6, a phosphite of the general formula $(R^1O)(R^2O)(R^3O)P$ in which each of $R^1$, $R^2$ and $R^3$ is an alkyl group having at least 9 carbon atoms, an aryl group or an alkaryl group, an arsine of the general formula $R^1R^2R^3As$ in which each of $R^1$, $R^2$ and $R^3$ have the aforestated meanings and a stibine of the general formula $R^1R^2R^3Sb$ in which each of $R^1$, $R^2$ and $R^3$ have the aforestated meanings, the mole ratio of said strong ligand to palladium being from about 1:1 to about 3:1; and,

c) a weak ligand selected from the group consisting of tertiary phosphine having a pKa in water of greater than about 6, a phosphite of the general formula $(R^4O)(R^5O)(R^6O)P$ in which each of $R^4$, $R^5$ and $R^6$ is an alkyl group having less than 9 carbon atoms, an arsine of the general formula $R^7R^8R^9As$ in which each of $R^7$, $R^8$ and $R^9$ is an alkyl group having less than 9 carbon atoms or an alkoxy group and a stibine of the general formula $R^7R^8R^9Sb$ in which each of $R^7$, $R^8$ and $R^9$ have the aforestated meanings, the mole ratio of said weak ligand to palladium being from about 4:1 to about 100:1.

2. The process of Claim 1 wherein the strong ligand is at least one member selected from the group consisting of: $P(CH_2CH_2CN)_3$, $PPh(CH_2CH_2CN)_2$, $PPh_3$, $P(Odecyl)(OPh)_2$, 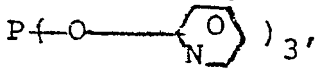 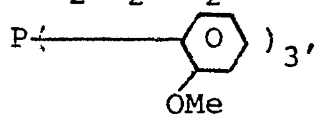 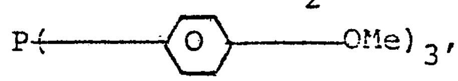 $Ph_2As-CH_2CH_2-AsPh_2$, $P(CH_2Ph)_3$ and $AsPh_3$.

3. The process of Claim 1 wherein the weak ligand is at least one member selected from the group consisting of $PBu_3$, $PPhBu_2$, $PPh(cyclohexyl)_2$ and $P(OiPr)_3$.

4. The process of any of Claims 1-3 wherein a catalyst promoting amount of at least one phenol promoter is in the reaction medium.

5. The process of any of Claims 1-3 wherein alkoxide ion is in the reaction medium.

6. The process of Claim 4 wherein the phenol promoter is at least one member selected from the group consisting of 4-cyanophenol, 4,4'-dihydroxybenzophenone, 3,5-dichlorophenol, pyrogallol, 2-cyanophenol, 2,6-dichlorophenol, 4-tert-butylcatechol, 4,4'dihydroxydiphenyl sulfone, chlorohydroquinone, 2-chlorophenol, catechol, 3-chlorophenol, 4,4'-thiodiphenol, 2-fluorophenol, phloroglucinol, 4-chlorophenol, resorcinol, hydroquinone, 4,4'-diphenol, 3-tert-butylphenol, quaiacol, phenol, 2-hydroxybenzophenone, 4-hydroxydiphenyl oxide, 4-nitrophenol, 2,3-dihydroxynaphthalene, 4,4'-isopropylidenediphenol, 4-tert-butylphenol, 2,6-di-tert-butylphenol and dioctadecyl-p-cresol.

BAD ORIGINAL

0063818

7. A palladium-ligand complex for use in catalyzing the reaction of a mixture of 1,3-butadiene, carbon monoxide and a monoalkanol of the general formula ROH in which R is a straight or branched chain alkyl group of from 1 to about 12 carbon atoms to provide alkyl nonadienoate characterized by:

a) a member selected from the group consisting of zerovalent palladium, a palladium-containing composition which provides zerovalent palladium under reaction conditions and palladium (II) salt;

b) a strong ligand selected from the group consisting of tertiary phosphine having a pKa in water of not greater than about 6, a phosphite of the general formula $(R^1O)(R^2O)(R^3O)P$ in which each of $R^1$, $R^2$ and $R^3$ is an alkyl group having at least 9 carbon atoms, an aryl group or an alkaryl group, an arsine of the general formula $R^1R^2R^3As$ in which each of $R^1$, $R^2$ and $R^3$ have the aforestated meanings and a stibine of the general formula $R^1R^2R^3Sb$ in which each of $R^1$, $R^2$ and $R^3$ have the aforestated meanings, the mole ratio of said strong ligand to palladium being from about 1:1 to about 3:1; and,

c) a weak ligand selected from the group consisting of tertiary phosphine having a pKa in water of greater than about 6, a phosphite of the general formula $(R^4O)(R^5O)(R^6O)P$ in which each of $R^4$, $R^5$ and $R^6$ is an alkyl group having less than 9 carbon atoms, an arsine of the general formula $R^7R^8R^9As$ in which each of $R^7$, $R^8$ and $R^9$ is an alkyl group having less than 9 carbon atoms or an alkoxy group and a stibine of the general formula $R^7R^8R^9Sb$ in which each of $R^7$, $R^8$ and $R^9$ have the aforestated meanings, the mole ratio of said weak ligand to palladium being from about 4:1 to about 100:1.

8. The palladium-ligand complex of claim 7 wherein the strong ligand is at least one member selected from the group consisting of:

$P(CH_2CH_2CN)_3$, $PPh(CH_2CH_2CN)_2$, $PPh_3$, $P(Odecyl)(OPh)_2$,

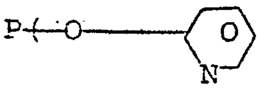 $)_3$, 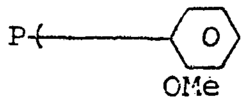 $)_3$, 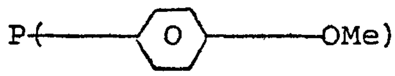 $)_3$,

$PH_2As-CH_2CH_2-AsPh_2$, $P(CH_2Ph)_3$ and $AsPh_3$.

9. The palladium-ligand complex of claim 7 wherein the weak ligand is at least one member selected from the group consisting of $PBu_3$, $PPhBu_2$, $PPh(cyclohexyl)_2$ and $P(OiPr)_3$.

10. The palladium-ligand complex of Claim 7 further containing alkoxide ion.

11. The palladium-ligand complex of Claim 7 which further contains a catalyst promoting amount of at least one phenol promoter.

12. The palladium-ligand complex of Claim 11 wherein the phenol promoter is at least one member selected from the group consisting of 4-cyanophenol, 4,4'-dihydroxydiphenyl sulfone, chlorohydroquinone, 2-chlorophenol, catechol, 3-chlorophenol, 4,4'-thiodiphenol, 2-fluorophenol, phloroglucinol, 4-chlorophenol, resorcinol, hydroquinone, 4,4'-diphenol, 3-tert-butylphenol, quaiacol, phenol, 2-hydroxybenzophenone, 4-hydroxydiphenyl oxide, 4-nitrophenol, 2,3-dihydroxynaphthalene, 4,4'-isopropylidenediphenol, 4-tert-butylphenol, 2,6-di-tert-butylphenol and dioctadecyl-p-cresol.

13. The palladium-ligand complex of Claim 7 wherein alkoxide ion is additionally present as catalyst promoter.

14. In a process for the reaction of 1,3-butadiene, alkanol and carbon monoxide in the presence of a palladium-containing Group VB tertiary donor ligand catalyst composition to provide an alkyl nonadienoate ester characterized by carrying out said reaction in the presence of a catalyst-prmoting amount of alkoxide ion.

15. The process of Claim 14 wherein the Group VB tertiary donor ligand is a tertiary phosphine having a pKa > 6.0.

16. The process of Claim 15 wherein the phosphine is triethylphosphine, tri-n-butyl phosphine, tricyclohexylphosphine, tri-n-octylphosphine and triphenyl phosphine.

17. The process of Claim 14 wherein the alkoxide ion is formed _in situ_ by the reaction of an alkali metal borohydride with an alkanol and is present to the extent of about 0.1 to about 10 molar equivalents of alkoxide ion per gram atom of palladium.

0063818

Application number

European Patent Office

# EUROPEAN SEARCH REPORT

EP 82103576.3

## DOCUMENTS CONSIDERED TO BE RELEVANT

| Category | Citation of document with indication, where appropriate, of relevant passages | Relevant to claim |
|---|---|---|
| A | DE - B - 1 221 224 (BASF)<br>+ Examples +<br>-- | 1 |
| A | US - A - 4 176 085 (JIN S. YOO AND R.L. MILAM)<br>+ Examples +<br>---- | 1 |

**CLASSIFICATION OF THE APPLICATION (Int. Cl. 3)**

C 07 C 69/587
C 07 C 67/38
B 01 J 31/18

**TECHNICAL FIELDS SEARCHED (Int.Cl. 3)**

C 07 C 69/00
C 07 C 67/00
B 01 J

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 22-07-1982 | HOFBAUER |